# FASCICULE DE BREVET EUROPEEN

(11) **EP 2 855 221 B1**
(45) Date de publication et mention de la délivrance du brevet: **04.12.2019**
(21) Numéro de dépôt: 13724266.5
(22) Date de dépôt: 22.05.2013
(51) Int. Cl.: B60T 13/567

(54) **SERVOFREIN A DEPRESSION A TUBES DE PASSAGE DE VIS DE FIXATION ET SON PROCEDE DE REALISATION**
UNTERDRUCKBREMSKRAFTVERSTÄRKERRÖHREN ZUR DURCHFÜHRUNG VON BEFESTIGUNGSSCHRAUBEN UND HERSTELLUNGSVERFAHREN DAFÜR
VACUUM BRAKE BOOSTER HAVING TUBES THROUGH WHICH ATTACHMENT SCREWS ARE TO PASS, AND METHOD FOR MANUFACTURING SAME

(30) Priorité: 31.05.2012 FR 1255037
(43) Date de publication de la demande: 08.04.2015
(73) Titulaire: Robert Bosch GmbH, 70442 Stuttgart (DE)
(72) Inventeur: BERTHOMIEU, Bruno, E-08041 Barcelona (ES); SIMON BACARDIT, Joan, E-08013 Barcelona (ES)
(86) Numéro de dépôt international: PCT/EP2013/060484
(87) Numéro de publication internationale: WO 2013/178513

(56) Documents cités:
- EP-A1- 2 058 195
- US-A1- 2007 089 601

## Description

### Domaine de l'invention

La présente invention se rapporte à un servofrein à dépression dont le boîtier formé d'un fond et d'un couvercle avec un piston intermédiaire, y délimitant deux chambres, est traversé par des tubes de passage des vis de fixation du servofrein à la cloison de l'habitacle du véhicule, chaque tube étant fixé par sertissage par son extrémité arrière dans un orifice du fond du boîtier et près de l'extrémité avant, à la traversée d'un orifice du couvercle, le tube a un appui périphérique à l'intérieur du boîtier et traverse le couvercle pour recevoir, côté extérieur, une patte du maître-cylindre, bloquée par un écrou vissé.

L'invention se rapporte également à un procédé de réalisation d'un tel servofrein à dépression.

### Etat de la technique

On connaît déjà un tel servofrein à tubes de fixation, notamment décrit dans le document EP 2 058 195.

La figure 4 qui est la reprise de la figure 2C du document EP 2 058 195 montre le tube de passage d'un servofrein à dépression selon l'état de la technique. Les références utilisées dans la figure 2C du document EP 2 0528 195 sont reprises pour le rappel de l'état de la technique.

Le tube 222 de passage de la vis est fixé au fond 213 par son pli 240 formant une surface d'appui. Le couvercle 215 est fixé près de l'autre extrémité du tube de passage par l'intermédiaire d'une rondelle 230 s'appuyant sur une butée axiale en forme de pli réalisée à cet endroit du tube de passage 222. Au-delà du couvercle 215, le tube de passage comporte une zone extérieure filetée recevant un manchon agrandissant le diamètre et traversant la patte 203 du maître-cylindre. Le manchon a un filetage extérieur pour recevoir un écrou 234 fixant la patte 203 au manchon.

La fixation du servofrein se fait à l'aide de la vis 220 dont la tête de diamètre réduit 222 s'appuie contre l'extrémité 232 du manchon. La partie filetée 236 traverse la cloison de l'enceinte du moteur pour être fixée par un écrou non représenté.

Ce montage utilise une rondelle frontale 230 pour supporter l'effort du couple de fixation du maître-cylindre avec un épaulement ou pli réalisé sur le tube 222 pour constituer l'appui de la rondelle. Il faut dans ces conditions utiliser une douille 232 sur la partie du tube 222 à l'extérieur du boîtier pour augmenter le diamètre du filetage de fixation de la patte 203 du maître-cylindre par l'écrou 234. Cette augmentation de diamètre est nécessaire pour pouvoir démonter le maître-cylindre sans démonter le servofrein pneumatique à dépression en passant sur la tête 221 de la vis sans l'enlever.

### But de l'invention

La présente invention a pour but d'améliorer la liaison entre les tubes de passage des vis de fixation et le boîtier du servofrein pneumatique à dépression pour augmenter sa fiabilité et l'efficacité du passage des tubes à travers le fond et le couvercle du boîtier et de façon générale simplifier la réalisation du tube et la fixation du maître-cylindre.

L'invention a également pour but de développer un procédé permettant de réaliser un tel servofrein pneumatique à dépression.

### Exposé et avantages de l'invention

A cet effet, l'invention a pour objet un servofrein à dépression du type défini ci-dessus, caractérisé en ce que l'extrémité avant du tube est filetée, et a une gorge périphérique dans laquelle est sertie une collerette derrière le couvercle dans le boîtier.

L'invention permet ainsi de fixer le maître-cylindre contre l'avant du boîtier en utilisant le filetage à l'extrémité avant de chaque tube dont le diamètre n'aura pas été réduit puisque l'appui du couvercle et aussi celui de la patte du maître-cylindre, se font directement contre la face avant du couvercle et par l'intermédiaire du couvercle contre la collerette sertie. La collerette constitue une rondelle de butée fixée au tube par déformation sans nécessiter de réduire le diamètre du tube. Cela permet de façon importante de supprimer la douille frontale extérieure nécessaire selon l'état de la technique pour recevoir la patte du maître-cylindre et pouvoir visser l'écrou sur l'extrémité filetée de la douille ou manchon agrandissant le diamètre. De façon générale, l'invention simplifie la conception en réduisant le nombre de composants et facilite le montage en réduisant par conséquent le coût.

Suivant une autre caractéristique avantageuse, la collerette est formée d'un anneau constituant une surface d'appui pour le couvercle autour de son orifice de passage du tube et un manchon avec une lèvre engagée par sertissage dans la gorge.

Suivant une autre caractéristique avantageuse, les pattes du maître-cylindre comportent des orifices traversés par l'extrémité avant du tube et bloqués par un écrou vissé directement sur le filetage de l'extrémité avant pour que la patte soit appuyée contre la face avant du couvercle par ailleurs appuyée contre la collerette.

L'invention a également pour objet un procédé de réalisation d'un servofrein à dépression dont le boîtier est traversé par des tubes de passage des vis de fixation du servofrein à la cloison de l'habitacle du véhicule, chaque tube étant fixé par sertissage par son extrémité arrière dans un orifice du fond du boîtier et près de l'extrémité avant, à la traversée de l'orifice du couvercle, le tube a un appui périphérique et traverse le couvercle pour recevoir, côté extérieur, une patte du maître-cylindre, bloquée par un écrou vissé sur l'extrémité avant filetée du tube.

L'invention a pour objet un procédé du type défini ci-dessus caractérisé en ce qu'on réalise une gorge dans la partie avant du tube et on façonne son extrémité arrière pour le sertissage de cette extrémité arrière au fond du boîtier. Après avoir serti l'extrémité arrière du tube dans le fond, on met en place le piston sur les tubes et on installe le sous-ensemble ainsi réalisé sur l'embase du poinçon de façon que les broches viennent dans l'extrémité arrière pour servir d'appui, et on installe une collerette sur l'extrémité avant de chaque tube, puis on met en place le poinçon de sertissage en emmanchant les extrémités avant des tubes dans les logements cylindriques du poinçon, on installe la matrice de sertissage autour de l'extrémité avant des deux tubes, derrière la gorge périphérique de façon à présenter l'entrée évasée au droit de chaque gorge et le passage au diamètre extérieur du tube, juste derrière la gorge périphérique, puis on pousse le poinçon de sertissage qui pousse la collerette pour engager le manchon et sa lèvre dans la gorge sertissant ainsi la collerette au tube, on met en place le couvercle et on l'assemble au fond en fixant la membrane du piston dans la région de sertissage entre le fond et le couvercle.

Suivant une autre caractéristique avantageuse, la matrice de sertissage est constituée de deux parties se rejoignant selon un plan de jonction passant par l'axe des passages pour venir coiffer les deux tubes au moment du sertissage et pouvoir s'en dégager après le sertissage.

### Dessins

La présente invention sera décrite ci-après de manière plus détaillée à l'aide d'un exemple de réalisation d'un servofrein à dépression représenté schématiquement dans les dessins annexés dans lesquels :
- la figure 1 est une vue en coupe axiale d'un mode de réalisation d'un servofrein à dépression selon l'invention,
- la figure 1A est une vue à échelle agrandie du détail A de la figure 1,
- la figure 2 est une vue en coupe axiale de la première étape de sertissage des tubes au couvercle,
- la figure 2A montre une matrice de sertissage en vue de face,
- la figure 2B est une vue de détail à échelle agrandie de la partie IIA de la figure 2,
- la figure 3 montre la seconde étape de sertissage des collerettes crantées aux tubes de passage,

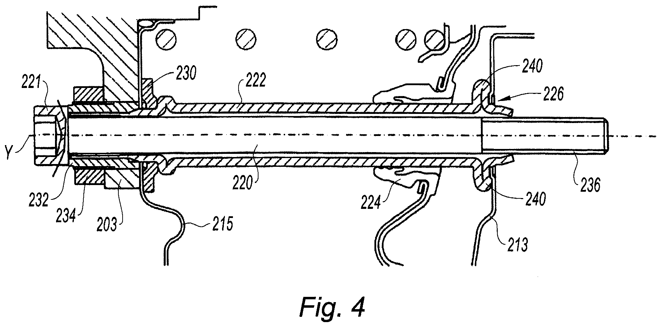

- la figure 4 est une reprise de la figure 2C du document EP 2058 195 de l'état de la technique.

### Description d'un mode de réalisation

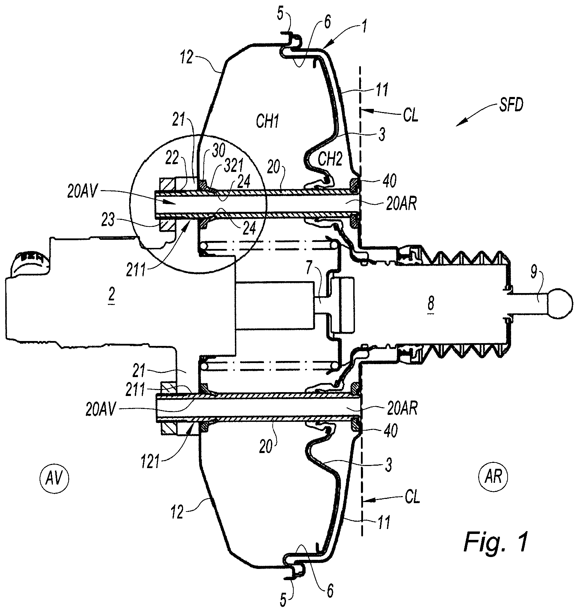

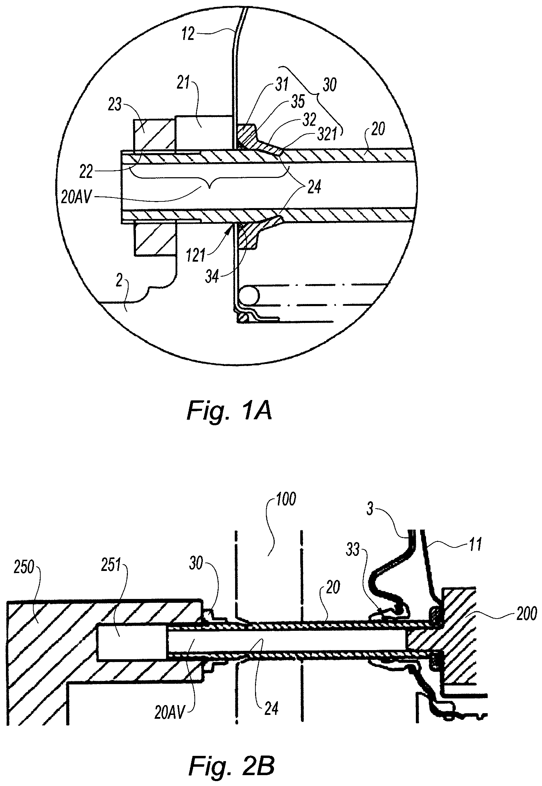

Selon la figure 1, l'invention a pour objet un servofrein à dépression (SFD) composé d'un boîtier à dépression 1 formé d'un fond 11 relié à un couvercle 12 avec interposition d'un piston rigide 3 relié à la région de sertissage périphérique 5 du fond 11 et du couvercle 12 par une membrane 6 de façon à délimiter de part et d'autre du piston 3 une chambre CH1, CH2 qui sont chacune initialement mise sous vide ; l'une (CH2) des chambres est mise à l'atmosphère au moment du freinage pour créer la poussée agissant sur la tige de poussée 7 actionnant le maître-cylindre 2 tel qu'un maître-cylindre tandem. La gestion pneumatique du servofrein est assurée par un ensemble de valves 8 non détaillé, actionnées par la tige de commande 9 elle-même reliée à la pédale de frein non représentée.

Le maître-cylindre 2 est fixé au servofrein (SFD) et l'ensemble ainsi assemblé est fixé à la cloison (CL) séparant l'enceinte du moteur (AV) et l'habitacle côté arrière (AR) du véhicule selon l'orientation du véhicule. Cette fixation se fait comme cela est connu par des vis traversant le boîtier 1 du servofrein dans des tubes 20 fixés au boîtier 1 du servofrein et assurant l'étanchéité des chambres. Ces tubes 20 traversent également de manière étanche le piston 3.

Le boîtier 1 est en général traversé par deux tubes 20 et reçoit ainsi deux vis munies d'un écrou pour être fixées à la cloison (CL). Chaque tube est fixé au fond 11 du boîtier 1 et reçoit en appui le couvercle 12, la vis servant également à fixer le maître-cylindre 2 par ses deux pattes 21 traversées chacune par un tube 20.

Selon l'invention, l'extrémité avant 20AV du tube 20 est munie du côté intérieur du boîtier, tourné vers le couvercle 12, d'une collerette 30 accrochée par sertissage dans l'épaisseur du tube 20 et servant d'appui pour recevoir le couvercle 12 ; ensuite à l'extérieur du couvercle, la patte 21 du maître-cylindre 2 est fixée par l'écrou 23 vissé sur l'extrémité avant filetée 22 du tube 20.

L'extrémité arrière 20AR du tube 20, côté cloison CL, est sertie au fond 11 du boîtier 1 du servofrein avec interposition d'une bague d'appui. 40

Selon le dessin agrandi de la figure 1A, la collerette sertie 30 est formée d'une couronne 31 et d'un manchon d'accrochage 32 terminé par une lèvre 321. Le manchon 32 est serti et accroché dans une gorge périphérique 24 réalisée dans le tube 20 au-delà de la partie filetée 22, du côté intérieur du couvercle 12.

L'extrémité avant 20 AV du tube 20 a une surface extérieure lisse pour le passage dans l'ouverture 121 du couvercle 12 et l'épaisseur de la patte 21, puis le filetage 22 pour recevoir l'écrou 23 bloquant la patte 21 du maître-cylindre 2 contre le couvercle 12.

Les autres éléments du servofrein (SFD), connus de manière générale, ne sont pas détaillés.

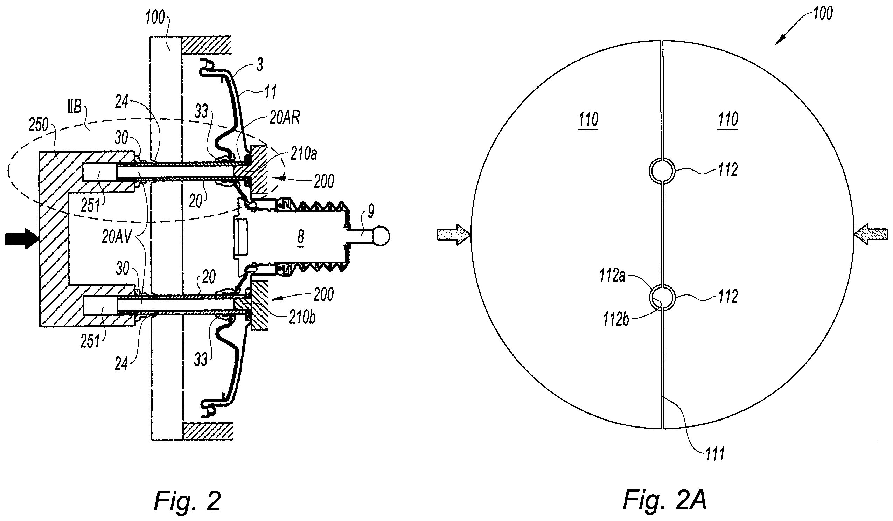

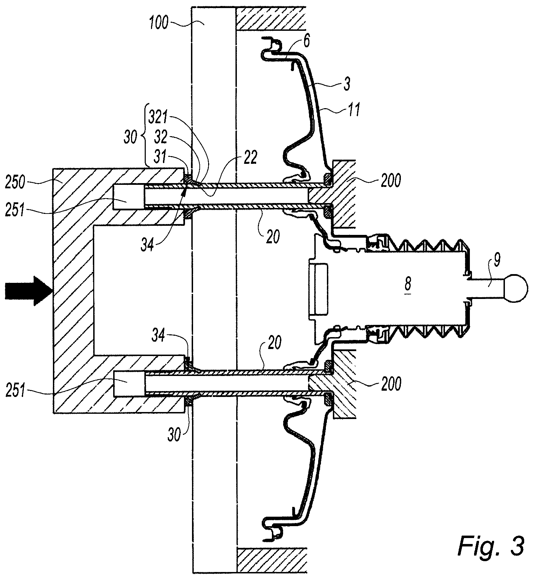

Les figures 2, 2A, 2B et 3 montrent la mise en place des collerettes 30 sur chacun des tubes 20 en principe identiques.

Selon la figure 2, après assemblage du fond 11 du boîtier 1 à l'extrémité arrière 20 AR (côté habitacle) de chacun des tubes 20 et mise en place du piston 3 sur les deux tubes 20, on installe une matrice de sertissage 100 (figure 2A) constituée par deux parties 110 assemblées suivant le plan de jonction 111 diamétral (ligne verticale) ; la matrice comporte dans le plan de jonction 111, deux orifices de sertissage 112 ayant une entrée évasée 112a et un passage 112b dont le diamètre correspond au diamètre extérieur du tube 20.

Cette matrice de sertissage 100 est mise en place sur les deux tubes 20 eux-mêmes tenus par une embase 200 munie de deux broches 210a, b engagées dans les tubes 20. Cette embase 200 peut être une partie de l'outil de sertissage ayant servi préalablement à sertir l'extrémité arrière 20AR du tube 20 au fond 11. Les tubes 20 sont munis chacun d'une gorge périphérique 24.

Les collerettes 30 sont engagées chacune sur l'extrémité avant 20AV d'un tube 20 encore en amont de la gorge 24 et déjà fixé au fond 11 et traversant le piston 3 avec son joint 33, le couvercle n'étant pas encore assemblé. Puis on pousse les collerettes 30 avec un poinçon de sertissage 250 ayant deux logements cylindriques 251 emmanchés sur l'extrémité 20 AV de chacun des tubes 20 de façon à pousser les deux collerettes 30 dans la matrice de sertissage 100. Le poinçon 250 s'appuie sur l'anneau 31 et le manchon 32 est guidé par la matrice de sertissage 100 pour s'engager dans la gorge périphérique 24, réalisée préalablement dans chaque tube 20.

La figure 3 montre la fin de l'opération de sertissage, la lèvre 321 du manchon 32 de chaque collerette 30 est engagée et appuyée dans la gorge périphérique 24 de son tube 20. Il est à remarquer que chaque collerette 30 laisse un volume libre 34 en forme de coin autour du tube 20, de façon à recevoir un joint d'étanchéité 35 s'appuyant sur la collerette 30, sur le tube 20 et sur le couvercle 12 autour de l'orifice 121 du couvercle. (Figure 1A).

L'assemblage du servofrein se poursuit ensuite par la mise en place du couvercle 12 et du maître-cylindre 2 pour constituer l'ensemble qui pourra être installé dans le véhicule.

### NOMENCLATURE

- SFD: servofrein à dépression
- CH1, CH2: chambres du boîtier
- CL: cloison
- AV: avant/enceinte du moteur
- AR: arrière/habitacle du véhicule
- 1: boîtier à dépression
- 2: maître-cylindre
21 patte
22 avant fileté
23 écrou
24 gorge périphérique
- 3: piston rigide
- 5: région périphérique de sertissage
- 6: membrane
- 7: tige de poussée
- 8: ensemble de valves
- 9: tige de commande
- 11: fond du boîtier
- 12: couvercle du boîtier
121 orifice du couvercle
- 20: tube
20 AV extrémité avant du tube 20
20 AR extrémité arrière du tube 20
- 100: matrice de sertissage
110 partie de la matrice
111 plan de jonction
112 orifice de sertissage
112a entrée évasée
112b passage
- 200: embase du poinçon de sertissage
210a,b broche
250 poinçon de sertissage
251 logement cylindrique
- 30: collerette
- 31: anneau
- 32: manchon
321 lèvre
- 33: joint
- 34: volume libre
- 35: joint

## Revendications

1. Servofrein à dépression dont le boîtier (1) formé d'un fond (11) et d'un couvercle (12) avec un piston (3) intermédiaire, y délimitant deux chambres (CH1, CH2), est traversé par des tubes (20) de passage des vis de fixation du servofrein à la cloison (CL) de l'habitacle du véhicule, chaque tube étant fixé par sertissage par son extrémité arrière (20AR) dans un orifice (111) du fond (11) du boîtier (1) et près de l'extrémité avant, à la traversée d'un orifice (121) du couvercle (12), le tube a un appui périphérique à l'intérieur du boîtier et traverse le couvercle (12) pour recevoir, côté extérieur, une patte (22) du maître-cylindre (2), bloquée par un écrou (23) vissé,
servofrein **caractérisé en ce que**
l'extrémité avant (20AV) du tube (20) est filetée, et a une gorge périphérique (24) dans laquelle est sertie une collerette (30) derrière le couvercle (12) dans le boîtier (1).

2. Servofrein à dépression selon la revendication 1,
**caractérisé en ce que**
la collerette (30) est formée d'un anneau (31) constituant une surface d'appui pour le couvercle (12) autour de son orifice (121) de passage du tube (20) et un manchon (32) avec une lèvre (321) engagée par sertissage dans la gorge (24).

3. Servofrein à dépression selon la revendication 1,
**caractérisé en ce que**
les pattes (21) du maître-cylindre (2) comportent des orifices (211) traversés par l'extrémité avant (20AV) du tube (20) et bloqués par un écrou (23) vissé directement sur le filetage (22) de l'extrémité avant (20AV) pour que la patte (21) soit appuyée contre la face avant du couvercle (12) par ailleurs appuyée contre la collerette (30).

4. Procédé de réalisation d'un servofrein à dépression dont le boîtier (1) est traversé par des tubes (20) de passage des vis de fixation du servofrein à la cloison (CL) de l'habitacle du véhicule, chaque tube étant fixé par sertissage par son extrémité arrière (20AR) dans un orifice (111) du fond (11) du boîtier (1) et près de l'extrémité avant, à la traversée de l'orifice (121) du couvercle (12), le tube a un appui périphérique et traverse le couvercle (12) pour recevoir, côté extérieur, une patte (22) du maître-cylindre (2), bloquée par un écrou (23) vissé sur l'extrémité avant filetée (22) du tube (20), selon l'une quelconque des revendications 1 à 3,
procédé **caractérisé en ce qu'**
- on réalise une gorge (24) dans la partie avant (20AV) du tube et on façonne son extrémité arrière (20AR) pour le sertissage de cette extrémité arrière au fond (11) du boîtier (1),
- après avoir serti l'extrémité arrière (20AR) du tube dans le fond (11), on met en place le piston (3) sur les tubes (20) et on installe le sous-ensemble ainsi réalisé sur l'embase (200) du poinçon de façon que les broches (210a, 210b) viennent dans l'extrémité arrière (20AR) pour servir d'appui, et
- on installe une collerette (30) sur l'extrémité avant de chaque tube (20), puis on met en place le poinçon de sertissage (250) en emmanchant les extrémités avant (20AV) des tubes dans les logements cylindriques (251) du poinçon (250),
- on installe la matrice de sertissage (100) autour de l'extrémité avant (20AV) des deux tubes, derrière la gorge périphérique (24) de façon à présenter l'entrée évasée (112a) au droit de chaque gorge (24) et le passage (112b) au diamètre extérieur du tube (20), juste derrière la gorge périphérique (24), puis on pousse le poinçon de sertissage (250) qui pousse la collerette (30) pour engager le manchon (32) et sa lèvre (321) dans la gorge (24) sertissant ainsi la collerette (30) au tube (20),
- on met en place le couvercle (12) et on l'assemble au fond (11) en fixant la membrane (6) du piston (3) dans la région de sertissage (5) entre le fond (11) et le couvercle (12).

5. Procédé selon la revendication 4,
**caractérisé en ce que**
la matrice de sertissage (100) est constituée de deux parties (110) se rejoignant selon un plan de jonction (111) passant par l'axe des passages (112b) pour venir coiffer les deux tubes (20) au moment du sertissage et pouvoir s'en dégager après le sertissage.

## Patentansprüche

1. Unterdruckbremskraftverstärker, dessen Gehäuse (1), welches aus einem Boden (11) und einem Deckel (12) mit einem dazwischenliegenden Kolben (3) gebildet ist, welcher darin zwei Kammern (CHI, CH2) begrenzt, von Rohren (20) zur Durchführung von Schrauben zur Befestigung des Bremskraftverstärkers an der Trennwand (CL) des Fahrgastraums des Fahrzeugs durchquert wird, wobei jedes Rohr durch Crimpen durch sein hinteres Ende (20AR) in einer Öffnung (111) des Bodens (11) des Gehäuses (1) und in der Nähe des vorderen Endes an der Durchquerung einer Öffnung (121) des Deckels (12) befestigt ist, wobei das Rohr eine umlaufende Auflage im Inneren des Gehäuses aufweist und den Deckel (12) durchquert, um an der Außenseite eine Lasche (22) des Hauptzylinders (2) aufzunehmen, welche mit einer aufgeschraubten Mutter (23) arretiert ist, wobei der Bremskraftverstärker **dadurch gekennzeichnet ist, dass** das vordere Ende (20AV) des Rohrs (20) mit Gewinde versehen ist und eine umlaufende Nut (24) aufweist, in welcher ein Kragen (30) hinter dem Deckel (12) in dem Gehäuse (1) gecrimpt ist.

2. Unterdruckbremskraftverstärker nach Anspruch 1,
**dadurch gekennzeichnet, dass**
der Kragen (30) aus einem Ring (31), welcher eine Auflagefläche für den Deckel (12) um seine Öffnung (121) zur Durchführung des Rohrs (20) herum darstellt, und einer Hülse (32) mit einer Lippe (321) gebildet ist, welche durch Crimpen in der Nut (24) in Eingriff steht.

3. Unterdruckbremskraftverstärker nach Anspruch 1,
**dadurch gekennzeichnet, dass**:
die Laschen (21) des Hauptzylinders (2) Öffnungen (211) umfassen, welche von dem vorderen Ende (20AV) des Rohrs (20) durchquert und von einer direkt auf das Gewinde (22) des vorderen Endes (20AV) aufgeschraubten Mutter (23) arretiert werden, damit die Lasche (21) an der vorderen Fläche des Deckels (12) und außerdem an dem Kragen (30) anliegt.

4. Verfahren zur Herstellung eines Unterdruckbremskraftverstärkers, dessen Gehäuse (1) von Rohren (20) zur Durchführung von Schrauben zur Befestigung des Bremskraftverstärkers an der Trennwand (CL) des Fahrgastraums des Fahrzeugs durchquert wird, wobei jedes Rohr durch Crimpen durch sein hinteres Ende (20AR) in einer Öffnung (111) des Bodens (11) des Gehäuses (1) und in der Nähe des vorderen Endes an der Durchquerung der Öffnung (121) des Deckels (12) befestigt ist, wobei das Rohr eine umlaufende Auflage aufweist und den Deckel (12) durchquert, um an der Außenseite eine Lasche (22) des Hauptzylinders (2) aufzunehmen, welche mit einer auf das vordere Gewindeende (22) des Rohrs (20) aufgeschraubten Mutter (23) arretiert ist, nach einem der Ansprüche 1 bis 3, wobei das Verfahren **dadurch gekennzeichnet ist, dass**
- eine Kehle (24) in dem vorderen Teil (20AV) des Rohrs hergestellt wird und sein hinteres Ende (20AR) für das Crimpen des hinteren Endes am Boden (11) des Gehäuses (1) bearbeitet wird,
- nachdem das hintere Ende (20AR) des Rohrs in dem Boden (11) gecrimpt worden ist, der Kolben (3) auf den Rohren (20) angeordnet wird und die so hergestellte Unterbaugruppe auf dem Sockel (200) des Stempels derartig installiert wird, dass die Dorne (210a, 210b) in das hintere Ende (20AR) gelangen, um als Auflage zu dienen, und
- ein Kragen (30) an dem vorderen Ende von jedem Rohr (20) installiert wird, und dann der Crimpstempel (250) angeordnet wird, indem die vorderen Enden (20AV) der Rohre in die zylindrischen Ausnehmungen (251) des Stempels (250) eingepasst werden,
- der Crimp-Amboss (100) um das vordere Ende (20AV) der beiden Rohre hinter der umlaufenden Kehle (24) herum installiert wird, um den aufgeweiteten Eingang (112a) rechts von jeder Kehle (24) und die Durchführung (112b) mit dem Außendurchmesser des Rohres (20) direkt hinter der umlaufenden Kehle (24) aufzuweisen, und dann der Crimpstempel (250) gedrückt wird, welcher den Kragen (30) drückt, um die Hülse (32) und ihre Lippe (321) in der Kehle (24) in Eingriff zu bringen, so dass der Kragen (30) an das Rohr (20) gecrimpt wird,
- der Deckel (12) angeordnet wird und mit dem Boden (11) zusammengebaut wird, indem die Membran (6) des Kolbens (3) in dem Crimpbereich (5) zwischen dem Boden (11) und dem Deckel (12) befestigt wird.

5. Verfahren nach Anspruch 4,
**dadurch gekennzeichnet, dass**
der Crimp-Amboss (100) aus zwei Teilen (110) besteht, welche sich gemäß einer Verbindungsebene (111), welche durch die Achse der Durchführungen (112b) verläuft, wieder vereinigen, um die beiden Rohre (20) zum Zeitpunkt des Crimpens zu überdecken und sich nach dem Crimpen lösen zu können.

## Claims

1. Vacuum brake booster, the casing (1) of which, formed by an end wall (11) and a cover (12) with an intermediate piston (3), delimiting two chambers (CH1, CH2) therein, is passed through by tubes (20) for the passage of screws for fastening the brake booster to the partition (CL) of the passenger compartment of the vehicle, each tube being fastened by being crimped by way of its rear end (20AR) in an orifice (111) in the end wall (11) of the casing (1), and close to the front end, where an orifice (121) passes through the cover (12), the tube bears peripherally against the inside of the casing and passes through the cover (12) in order to receive, on the outside, a tab (22) of the master cylinder (2), said tab (22) being locked in place by a screwed-on nut (23),
said brake booster being **characterized in that**
the front end (20AV) of the tube (20) is threaded and has a peripheral groove (24) in which a collar (30) is crimped behind the cover (12) in the casing (1).

2. Vacuum brake booster according to Claim 1,
**characterized in that**
the collar (30) is formed by a ring (31) that constitutes a bearing surface for the cover (12) around its through-orifice (121) for the tube (20), and a sleeve (32) with a lip (321) fitted in the groove (24) by being crimped.

3. Vacuum brake booster according to Claim 1,
**characterized in that**
the tabs (21) of the master cylinder (2) have orifices (211) through which the front end (20AV) of the tube (20) passes and which are locked in place by a nut (23) screwed directly onto the thread (22) of the front end (20AV) in order that the tab (21) is pressed against the front face of the cover (12), which is otherwise pressed against the collar (30).

4. Method for producing a vacuum brake booster of which the casing (1) is passed through by tubes (20) for the passage of screws for fastening the brake booster to the partition (CL) of the passenger compartment of the vehicle, each tube being fastened by being crimped by way of its rear end (20AR) in an orifice (111) in the end wall (11) of the casing (1), and close to the front end, where the orifice (121) passes through the cover (12), the tube bears peripherally and passes through the cover (12) in order to receive, on the outside, a tab (22) of the master cylinder (2), said tab (22) being locked in place by a nut (23) screwed onto the threaded front end (22) of the tube (20), according to any one of Claims 1 to 3,
said method being **characterized in that**
- a groove (24) is made in the front part (20AV) of the tube and its rear end (20AR) is shaped in order to crimp this rear end to the end wall (11) of the casing (1),
- once the rear end (20AR) of the tube has been crimped in the end wall (11), the piston (3) is fitted on the tubes (20) and the subassembly thus produced is installed on the base (200) of the punch such that the pins (210a, 210b) enter the rear end (20AR) in order to act as a support, and
- a collar (30) is installed on the front end of each tube (20), then the crimping punch (250) is put in place by fitting the front ends (20AV) of the tubes in the cylindrical housings (251) of the punch (250),
- the crimping die (100) is installed around the front end (20AV) of the two tubes, behind the peripheral groove (24) so as to have the flared inlet (112a) in line with each groove (24) and the passage (112b) at the outside diameter of the tube (20), just behind the peripheral groove (24), then the crimping punch (250) is pushed, which pushes the collar (30) in order to fit the sleeve (32) and the lip (321) thereof in the groove (24), thereby crimping the collar (30) to the tube (20),
- the cover (12) is put in place and it is joined to the end wall (11) by fastening the diaphragm (6) of the piston (3) in the crimping region (5) between the end wall (11) and the cover (12).

5. Method according to Claim 4,
**characterized in that**
the crimping die (100) is made up of two parts (110) that meet at a junction plane (111) passing through the axis of the passages (112b) in order to cover the two tubes (20) when crimping takes place and to be able to be disengaged therefrom after crimping.
